# EUROPEAN PATENT APPLICATION

(11) **EP 3 473 542 A1**
(43) Date of publication of application: **24.04.2019**
(21) Application number: 16921046.5
(22) Date of filing: 14.11.2016
(51) Int. Cl.: B64C 27/32, B64D 35/00

(54) **ROTOR ASSEMBLY AND UNMANNED AERIAL VEHICLE**

(71) Applicant: SZ DJI Technology Co., Ltd., Shenzhen, Guangdong 518057 (CN)
(72) Inventor: SUN, Liang, Shenzhen Guangdong 518057 (CN); PENG, Tao, Shenzhen Guangdong 518057 (CN); GUO, Xiaokai, Shenzhen Guangdong 518057 (CN); OU, Di, Shenzhen Guangdong 518057 (CN)
(74) Representative: Goddar, Heinz J.
(86) International application number: PCT/CN2016/105769
(87) International publication number: WO 2018/086128

(57) **Abstract**

The present invention discloses a rotor-wing assembly (30), comprising a motor (31), a propeller (32), and a connection assembly (33) connecting the propeller (32) to the motor (31). The motor (31) comprises a rotating portion (312). The connection assembly (33) comprises a locking member (331) and a reinforcing member (332) arranged between the propeller (32) and the motor (31). The locking member (331) locks the propeller (32) on the rotating portion (312). A first end (3323) of the reinforcing member (332) is mounted on the rotating portion (312). A second end (3324) of the reinforcing member (332) opposite to the first end (3323) is engaged with the locking member (331) for reinforcing the locking member (331) to lock the propeller (32) on the rotating portion (312). The present invention also discloses an unmanned aerial vehicle (100).

## Description

### TECHNICAL FIELD

The present invention generally relates to the field of aircraft, and more particularly relates to a rotor-wing assembly and an unmanned aerial vehicle.

### BACKGROUND

In related technologies, an unmanned aerial vehicle (UAV) includes a motor and a locking member arranged on the motor. After rotating relative to the motor, the locking member engages with a locking catch of the propeller of the UAV, thus restricting the movement of the propeller with respect to the motor and facilitating disassembly and assembly of the propeller. However, due to the vibration generated during flight of the UAV, the locking member and the propeller are disengaged, which causes the propeller to fly off the motor and affects the normal flight of the UAV.

### BRIEF SUMMARY OF THE INVENTION

The present invention aims to at least solve one of the technical problems existing in the existing technologies. To this end, the present invention needs to provide a rotor-wing assembly and a UAV.

The rotor-wing assembly disclosed in the embodiments of the present invention includes motors, propellers, and connection assemblies. The motor includes a rotating portion. The connection assembly includes a locking member and a reinforcing member disposed between the propeller and the motor. The locking member locks the propeller to the rotating portion. A first end of the reinforcing member is mounted on the rotating portion. A second end of the reinforcing member opposite to the first end engages with the locking member for reinforcing the locking member to lock the propeller on the rotating portion.

In some embodiments, the rotating portion is formed with a first position-limiting structure. The first end of the reinforcing member is formed with a second position-limiting structure. When the second position-limiting structure is disposed in the first position, the propeller is in a locked state. The first position-limiting structure is coupled with the second position-limiting structure, which allows the first end of the reinforcing member to be fixed on the rotating portion.

When the second position-limiting structure is disposed in the second position and the propeller is in the unlocked state, the locking member can rotate relative to the propeller about the rotation axis of the propeller.

In some embodiments, the first position-limiting structure is a position-limiting block and the second position-limiting structure is a position-limiting groove capable of engaging with the position-limiting block, and/or the first position-limiting structure is a position-limiting groove and the second position-limiting structure is a position-limiting block capable of engaging with the position-limiting groove.

In some embodiments, the position-limiting groove extends in the circumferential direction of the propeller disk formed by rotation of the propeller.

In some embodiments, the rotating portion is formed with a guide-rail groove extending in the circumferential direction of the propeller disk formed by rotation of the propeller. The locking member includes a mounting portion mounted on the rotating portion and a guiding portion extending from the mounting portion in the direction away from the propeller. The guiding portion is coupled with the guide-rail groove for guiding the locking member to rotate about the rotation axis.

In some embodiments, the guiding portion includes a guiding section connected with the mounting portion and a holding section connected with the guiding section. The guiding section is located in the guide-rail groove, and the holding section is clamped on the rotating portion to prevent the locking member from being separated from the rotating portion.

In some embodiments, when the first position-limiting structure is a position-limiting groove and the second position-limiting structure is a position-limiting block capable of engaging with the position-limiting groove, the guide-rail groove connects with the position-limiting groove, and the position-limiting block can move from the position-limiting groove into the position-limiting groove, such that the locking member can rotate relative to the propeller about the rotation axis.

In some embodiments, the locking member also includes a locking catch extending from the mounting portion toward the propeller. The propeller includes a hub, one or more blades disposed on the peripheral wall of the hub, and a first locking block disposed on the peripheral wall and coupled with the locking catch. When the propeller is locked, the locking catch is connected to the first locking block and the second end of the reinforcing member engages with the locking catch.

In some embodiments, the end of the locking catch connected with the first locking block is formed with a second locking block coupled with the first locking block. The locking member locks the propeller by engaging the second locking block with the first locking block.

In some embodiments, two mutually coupled surfaces of the first locking block and the second locking block are both inclined surfaces tilted at a predetermined angle relative to the rotation axis of the propeller. In the direction of the rotation axis, the side of the surface near the rotation axis is closer to the motor than the side away from the rotation axis.

In some embodiments, the two mutually coupled surfaces of the first locking block and the second locking block are engaged with each other in an interference-fit manner.

In some embodiments, the second locking block includes a top surface, a first side surface, and a second side surface opposite to the first side surface. The first side surface connected with the top surface is adjacent and opposite to the first side surface. The second end of the reinforcing member is formed with an engaging hook.

The engaging hook includes an engaging surface and the engaging surface engages on the top surface.

Alternatively, the engaging hook includes two engaging surfaces connected with each other at an angle to each other. The two engaging surfaces engage on the top surface and the first side surface, respectively.

Alternatively, the top surface is provided with an engaging hole. The engaging hook includes an engaging portion and a contact portion. The engaging portion engages in the engaging hole, and the contact portion is in contact with the top surface.

Alternatively, the top surface is provided with a recess. An engaging hole is formed at the bottom of the recess. The engaging hook includes an engaging portion and a contact portion connected with each other at an angle to each other. The engaging portion engages in the engaging hole and the contact portion is in contact with the bottom of the recess.

Alternatively, the second side surface is provided with an engaging hole and the engaging hook engages in the engaging hole.

In some embodiments, the reinforcing member further includes a connection arm connecting the second position-limiting structure and the engaging hook. The connection arm is made of an elastic material.

In some embodiments, the number of the blades is two. The first locking block is disposed between the two blades. A space is formed between the first locking block and one of the blades, which allows the locking catch to pass through.

In some embodiments, the connection assembly further includes a connection member connecting the propeller and the rotating portion. The connection member can be detachably mounted the locking member.

In some embodiments, the connection member includes a connection plate and a position-limiting shaft extending from the connection plate to the propeller. The connection plate holds against the locking member. The position-limiting shaft is connected to the propeller and can restrict the rotation of the propeller with respect to the connection member.

In some embodiments, the connection member further includes a reinforcing block extending from the connection plate to the hub. One side of the hub facing the rotating portion is provided with a mounting hole corresponding to the reinforcing block. The reinforcing block is mounted in the mounting hole.

In some embodiments, the connection member further includes one or more position-limiting posts extending from the connection plate to the rotating portion. The one or more position-limiting posts are connected to the rotating portion by passing through the locking member, which can restrict the rotation of the connection member relative to the rotating portion.

In some embodiments, the rotating portion includes an end surface opposite to the connection member. One or more position-limiting holes are formed on the end surface. The one or more position-limiting posts engage in the one or more position-limiting holes.

In some embodiments, the one or more position-limiting posts are of a polygonal shape, an oblong shape, or an elliptical shape.

In some embodiments, the number of the position-limiting posts is at least two. The position-limiting posts correspond to the position-limiting holes. At least two position-limiting posts are disposed in the corresponding position-limiting holes.

In some embodiments, at least two of the position-limiting posts are arranged symmetrically about the rotation axis.

The UAV disclosed in the embodiments of the present invention includes the rotor-wing assembly of any foregoing embodiments.

The rotor-wing assembly and the UAV disclosed in the embodiments of the present invention can prevent the propeller from flying off the motor of the UAV, due to the reinforcing member that can reinforce the locking member to lock the propeller on the rotating portion, thereby ensuring the normal flight of the UAV.

Additional aspects and advantages of the present invention will be set forth partially in the following description, and will become apparent from the following description, or will be understood by the practice of the present invention.

### BRIEF DESCRIPTION OF THE DRAWINGS

The foregoing and/or additional aspects and advantages of the present invention will become apparent and readily understood by reference to the following detailed description in conjunction with the accompanying drawings, wherein:
FIG. 1 is a schematic perspective view of an unmanned aerial vehicle according to embodiments of the present invention;
FIG. 2 is a schematic perspective view of a rotor-wing assembly of an unmanned aerial vehicle according to embodiments of the present invention;
FIG. 3 is a schematic cross-sectional view of the rotor-wing assembly of the unmanned aerial vehicle shown in FIG. 2;
FIG. 4 is a schematic exploded view of the rotor-wing assembly of the unmanned aerial vehicle shown in FIG. 2;
FIG. 5 is a schematic exploded view, from another perspective, of the rotor-wing assembly of the unmanned aerial vehicle shown in FIG. 2; and
FIG. 6 is a schematic bottom view of the rotor-wing assembly of the unmanned aerial vehicle shown in FIG. 2.

Description of symbols of main components:
unmanned aerial vehicle 100;
fuselage 10, housing shell 11;
arm 20, main arm 21, branch arm 22;
rotor-wing assembly 30;
motor 31, rotating portion 312, central axis 31 a of motor, first position-limiting structure 3121, position-limiting groove 3121, guide-rail groove 3122, end surface 3123, position-limiting hole 3124, heat-dissipating hole 3125;
propeller 32, rotation axis 32a of propeller, hub, 321, connection hole 3211, mounting hole 3212, first alignment mark 3213, peripheral wall 3214, blade 322, first locking block 323, first mating surface 3231;
connection assembly 33, locking member 331, mounting portion 3311, guiding portion 3312, guiding section 33121, holding section 33122;
locking catch 3313, second locking block 33131, second mating surface 33132, top surface 33133, first side surface 33134, second side surface 33135, recess 33136, engaging hole 33137, second alignment mark 33138;
reinforcing member 332, first end 332, second end 3324, second position-limiting structure 3321, position-limiting block 3321, engaging hook 3322, engaging portion 33221, contact portion 33222, connection arm 3323;
connection member 333, connection plate 3331, position-limiting shaft 3332, reinforcing block 3333, position-limiting post 3334.

### DETAILED DESCRIPTION

The embodiments of the present invention will be described in detail below. The examples of the embodiments are illustrated in the accompanying drawings, in which the same or similar reference numerals are used to refer to the same or similar elements or elements having the same or similar functions. The embodiments described below by reference to the accompanying drawings are exemplary and intended to provide explanation of the present invention, which cannot be construed as the limitation of the present invention.

In the description of the present invention, it should be understood that the terms "first" and "second" are used for descriptive purposes only, which cannot be construed as indicating or implying a relative importance, or implicitly specifying the number of the indicated technical features. Thus, the features defined with "first" and "second" may explicitly or implicitly include one or more features. In the description of the present invention, "a plurality of' means two or more than two, unless specifically stated otherwise.

In the description of the present invention, it should be noted that unless specifically stated and limited, the terms "mounting," "joining," "connection" should be understood in a broad sense, such as, a fixed connection, a detachable connection, or an integral connection; a mechanical connection, an electrical connection, or a communicative connection; a direct connection, an indirect connection through an intermediate medium, an internal connection of two elements, or an interaction of two elements. For those ordinary skilled in the art, the specific meanings of the foregoing terms in the present invention can be understood on a case-by-case basis.

The following disclosure provides many different embodiments or examples for implementing different structures of the present invention. For simplifying the present invention, the components and arrangements of the specific examples are described below. Certainly, they are merely examples and are not intended to limit the invention. In addition, the present invention may repeat the reference numerals and/or letters, which is for the purpose of simplicity and clarity and does not itself indicate the relationship between the various embodiments and/or settings discussed. Moreover, the present invention provides examples of various specific processes and materials, however, those ordinary skilled in the art can realize the use of other processes and/or the use of other materials.

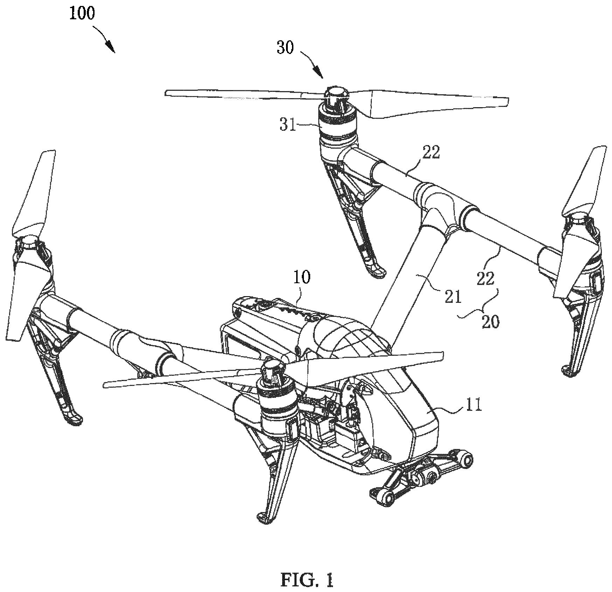

Referring to FIG. 1, the unmanned aerial vehicle (UAV) 100 of the present invention is a rotor-wing UAV. The UAV 100 can fly and hover in the air to perform specific tasks, such as flight, tracking, monitoring, exploration, search and rescue, sowing, spraying pesticides, firefighting, and aerial photography. The UAV 100 may be equipped with modules having predetermined functions, such as a sensor, a photographing device, a medical kit, to implement specific functions.

The UAV 100 of the present invention includes a fuselage 10, one or more arms 20 and rotor-wing assemblies 30. The one or more arms 20 are installed on the fuselage 10. The one or more rotor-wing assemblies 30 are installed on the one or more arms 20 and arranged around the fuselage 10. In one embodiment, the UAV 100 may be a quad-rotor type UAV, and correspondingly the number of the rotor-wing assemblies 30 may be four. The four rotor-wing assemblies 30 may be centrally symmetrical about the vertical central axis of the fuselage 10 for balancing the UAV 100 during flight.

It can be understood that in other embodiments, the number of the rotor-wing assemblies 30 may be set as other numbers according to actual needs. For example, the number of the one or more rotor-wing assemblies 30 may be one, two, three, six, eight, etc.

The fuselage 10 may serve as a carrier of the UAV 100. Components, such as sensors, circuit boards, processors, communication modules, and batteries, may be carried outside and/or inside the fuselage 10. In one embodiment, the fuselage 10 includes a housing shell 11. A housing space of accommodating the foregoing components may be formed inside of the housing shell 11. The housing shell 11 may be streamlined, which can reduce air resistance during flight. In other embodiments, the housing shell 11 may have another shape, such as a polygonal shape, a circular shape, an elliptical shape. It can be understood that the housing shell 11 may also be omitted and the fuselage 10 may be formed only by overlapping brackets.

The arm 20 may support and allow the rotor-wing assembly 30 to surround the fuselage 10 in a predetermined pattern. In one embodiment, the number of the arms 20 is two. Each arm 20 supports two rotor-wing assemblies 30 and includes a main arm 21 and a branch arm 22. One end of the main arm 21 is connected to the fuselage 10, and the other end is connected to the branch arm 22. The main arm 21 and the branch arm 22 are connected to each other in a T shape. The two rotor-wing assemblies 30 corresponding to each arm 20 are arranged at two ends of the corresponding branch arm 22, respectively.

In other embodiments, the number of the arms 20 may be identical with the number of the rotor-wing assemblies 30, i.e., each arm 20 may support one rotor-wing assembly 30. In these embodiments, the arm 22 can be omitted and the rotor-wing assembly 30 may be directly arranged at the end of the main arm 21.

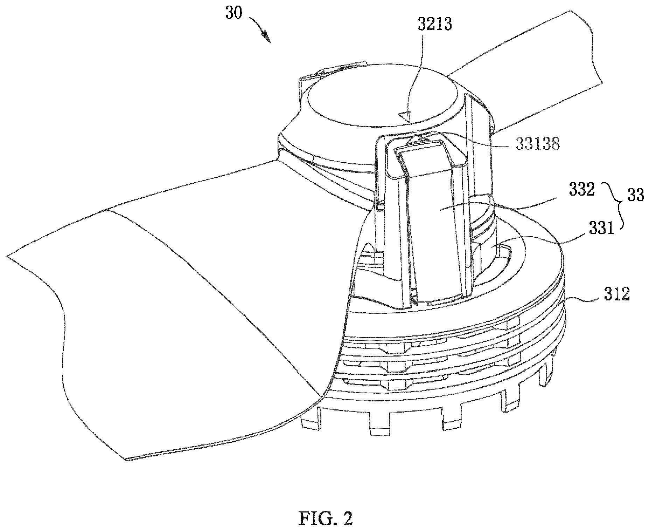

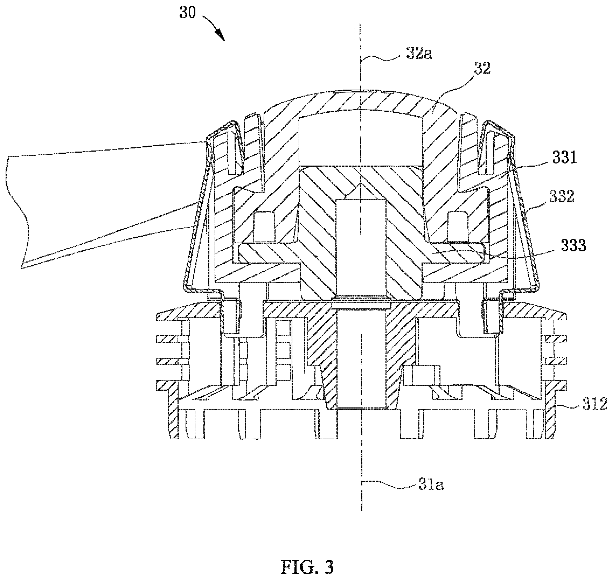

Referring also to FIG. 2 and FIG. 3, the rotor-wing assembly 30 of the present invention includes a motor 31, a propeller 32, and a connection assembly 33. The connection assembly 33 connects the propeller 32 to the motor 31.

In one embodiment, the motor 31 may be any type of suitable motor, such as a brushless motor or a brush motor. It can be understood that a central axis 31a of the motor 31 coincides with a rotation axis 32a of the propeller 32.

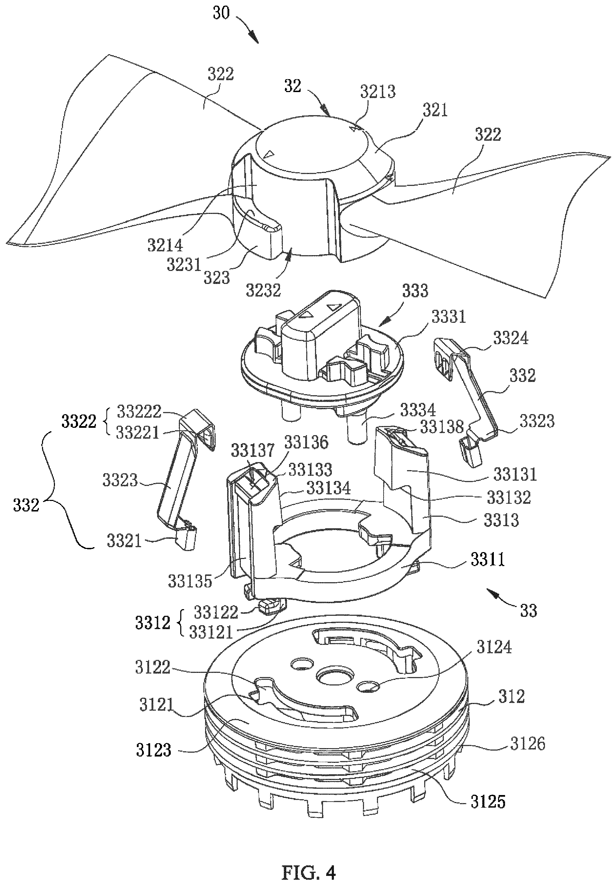

Referring to FIG. 4, the motor 31 includes a rotating portion 312. The rotating portion 312 may have a cylindrical structure. The rotating portion 312 includes an end surface 3123 opposing the propeller 32 and a sidewall 3126 connected to the end surface 3123.

The end surface 3123 is formed with one or more first position-limiting structures 3121, one or more guide-rail grooves 3122 extending in the circumferential direction of the propeller disk formed by the rotation of the propeller 32, and one or more position-limiting holes 3124. The first position-limiting structure 3121 may be a position-limiting groove 3121. The position-limiting groove 3121 may extend in the circumferential direction of the propeller disk formed by the rotation of the propeller 32. The guide-rail groove 3122 is connected with the position-limiting groove 3121. There may be two guide-rail grooves 3122 spaced apart and there may also be two position-limiting grooves 3121. Each guide-rail groove 3122 may be connected with a position-limiting groove 3121. The two guide-rail grooves 3122 may be centrosymmetrically distributed about the central axis 31a of the rotating portion 312, and the two position-limiting grooves 3121 may also be centrosymmetrically distributed about the central axis 31a of the rotating portion 312. The position-limiting hole 3124, the guide-rail groove 3124, and the position-limiting groove 3121 may all be arranged separately. In one embodiment, the number of the position-limiting holes 3124 may be two. The two position-limiting holes 3124 may be arranged centrosymmetrically about the central axis 31a of the motor 31. In other words, the two position-limiting holes 3124 may be arranged centrosymmetrically about the rotation axis 32a of the propeller 32. In other embodiments, the number of the one or more position-limiting holes 3124 may be one, three, four, etc. When there are a plurality of position-limiting holes 3124, the plurality of position-limiting holes 3124 may be arranged centrosymmetrically about the central axis 31a of the motor 31. In one embodiment, the two position-limiting holes 3124 may each be of a circular shape. In other embodiments, the two position-limiting holes 3124 may have one or more non-circular shapes including a polygonal shape, an oval shape or an elliptical shape, etc. It can be understood that in other embodiments, when the number of the position-limiting holes 3124 is more than two, one of the position-limiting holes 3124 may also have a non-circular shape, such as a polygonal shape, an oval shape, or an elliptical shape.

A plurality of heat-dissipating holes 3125 may be formed on the sidewall 3126 of the rotating portion 312, thereby dissipating heat generated by the motor 31 to reduce the temperature of the motor 31 and prolonging the lifetime of the motor 31. To further ensure the effect of heat dissipation and reinforce the strength of the rotating portion 312, the rotating portion 312 may be made of a metal material, such as aluminum alloy.

The propeller 32 includes a hub 321, one or more blades 322, and a first locking block 323.

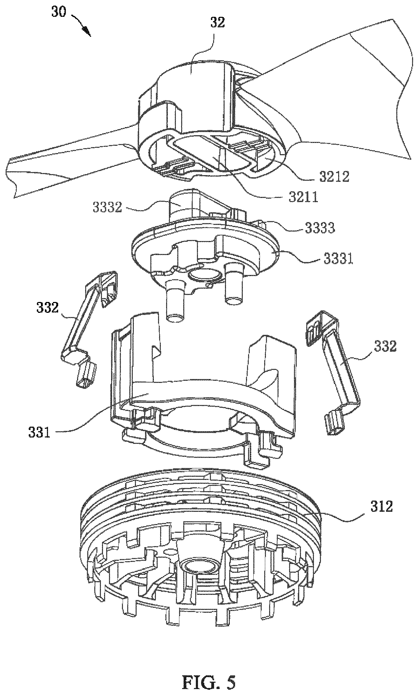

Referring to FIG. 5, the hub 321 may approximately be of a cylindrical shape. A connection hole 3211 and one or more mounting holes 3212 are formed at a side of the hub 321 facing the rotating portion 312. The connection hole 3211 is arranged at the center of the hub 321, and the connection hole 3211 may have an oblong shape. In other embodiments, the connection hole 3211 may also be in another shape, such as a square shape or an elliptical shape. The one or more mounting holes 3212 are arranged around the connection hole 3211.

Referring again to FIG. 4, a first alignment mark 3213 is formed on the upper surface of the hub 321. In one embodiment, the first alignment mark 3213 may be of a triangle shape. It can be understood that the first alignment mark 3213 may be of another shape. For example, the first alignment mark 3213 may be in the shape of a circle, a square, an ellipse, etc.

The one or more blades 322 are arranged on a peripheral wall 3214 of the hub 321. The number of the blades 322 may be two. The two blades 322 are fixed to both sides of the hub 321 in the same radial direction of the hub 321. The blades 322 can rotate to provide power for the UAV 100 to ascend and/or move forward.

The first locking block 323 is arranged on the peripheral wall 3214. The first locking block 323 is located between the two blades 322. A space 3232 is formed between the first locking block 323 and one of the blades 322.

A first mating surface 3231 is formed on a side of the first locking block 323 facing away from the rotating portion 312. The first mating surface 3231 is an inclined surface, tilted at a certain angle with respect to the rotation axis 32a of the propeller 32. In the direction of the rotation axis 32a, the side of the first mating surface 3231 near the rotation axis 32a is closer to the motor 31 than the side of the first mating surface 3231 away from the rotation axis 32a.

The connection assembly 33 includes a locking member 331, a reinforcing member 332, and a connection member 333. The locking member 331 may lock the propeller 32 on the rotating portion 312. The reinforcing member 312 may reinforce the locking member 331 for locking the propeller 32 to the rotating portion 312.

The locking member 331 includes a mounting portion 3311, a guiding portion 3312, and a locking catch 3313. The mounting portion 3311 is mounted on the rotating portion 312, and the guiding portion 3312 extends from the mounting portion 3311 in the direction away from the propeller 32. The locking catch 3313 extends from the mounting portion 3311 toward the propeller 32.

The mounting portion 3311 may approximately be of an annular shape. Preferably, the center of the mounting portion 3311 may coincide with the rotation axis 32a of the propeller 32, thus allowing the locking member 331 to rotate well around the rotation axis 32a of the propeller 32.

The guiding portion 3312 is coupled with the guide-rail groove 3122 for guiding the locking member 331 to rotate about the rotation axis 32a of the propeller 32. Specifically, the guiding portion 3312 includes a guiding section 33121 connected with the mounting portion 3311 and a holding section 33122 connected with the guiding section 33121. The guiding section 33121 is located in the guide-rail groove 3122. The holding section 33122 is engaged with the rotating portion 312 to prevent the locking member 331 from being separated from the rotating portion 312. The guiding section 33121 is connected with the holding section 33122 to form a certain angle, such that the holding section 33122 can be retained on the rotating portion 312. The angel formed by the guiding section 33121 and the holding section 33122 connecting with each other may be an acute angle or a right angle. There may be two guiding sections 33121. Each of the guiding sections 33121 may be coupled with a corresponding guide-rail groove 3122, respectively, thus allowing the locking member 331 to be stressed uniformly and rotate well around the rotation axis 32a of the propeller 32.

The locking catch 3313 is coupled with the first locking block 323. When the propeller 32 is locked, the locking catch 3313 may be connected with the first locking block 323, and a second end 3324 of the reinforcing member 332 may be engaged with the locking catch 3313. During installation, the locking catch 3313 may pass through the space 3232 formed between the first locking block 323 and one of the blades 322.

A second locking block 33131 is formed at the end of the locking catch 3313 that is connected with the first locking block 323. The second locking block 33131 is coupled with the first locking block 323. The locking member 331 is engaged with the first locking block 323 through the second locking block 33131 to lock the propeller 32.

A second mating surface 33132 is formed on the side of the second locking block 33131 that faces the rotating portion 312. The second mating surface 33132 is an inclined surface tilted at a certain angle with respect to the rotation axis 32a of the propeller 32. In the direction of the rotation axis 32a, the side of the second mating surface 33132 near the rotation axis 32a is closer to the motor 31 than the side of the second mating surface 33132 away from the rotation axis 32a.

Therefore, it can be understood that the two mutually coupled surfaces (the first mating surface 3231 and the second mating surface 33132) of the first locking block 323 and the second locking block 33131 are both inclined surfaces tilted at a predetermined angle with respect to the rotation axis 32a of the propeller 32. In the direction of the rotation axis 32a, the side of the surface near the rotation axis 32a is closer to the motor 31 than the side away from the rotation axis 32a. Preferably, the two mutually coupled surfaces of the first locking block 323 and the second locking block 33131 may be engaged with each other in an interference-fit manner.

The second locking block 33131 also includes a top surface 33133, a first side surface 33134, and a second side surface 33135. The first side surface 33133 is connected with the top surface 33133. The first side surface 33134 is close to and faces the peripheral wall 3214 of the propeller 32. The second side surface 33135 is opposite to the first side surface 33134. A recess 33136 is provided on the top surface 33133. An engaging hole 33137 is provided on the bottom of the recess 33136.

The top surface 33133 of the second locking block 33131 is formed with a second alignment mark 33138. When the propeller 32 is locked, the second alignment mark 33138 may be aligned with the first alignment mark 3213. In one embodiment, the first alignment may be of a triangle shape. It can be understood that the first alignment mark 3213 may also be another shape. For example, the first alignment mark 3213 may be in the shape of a circle, a square, an ellipse, etc.

The locking member 331 may be in an integrally formed structure. For example, the locking member 331 may be formed by an injection-molding process or a die-casting process.

A first end 3323 of the reinforcing member 332 is mounted on the rotating portion 312. A second end 3324 of the reinforcing member 332 opposite to the first end 3323 may engage with the locking member 331 for reinforcing the locking member 331 to lock the propeller 32 to the rotating portion 312.

The first end 3323 of the reinforcing member 332 is formed with a second position-limiting structure 3321. The second position-limiting structure 3321 is a position-limiting block 3321 capable of engaging with the position-limiting groove 3121.

When the second position-limiting structure 3321 is in a first position, the propeller 32 may be in the locked state. The first position-limiting structure 3121 may be coupled with the second position-limiting structure 3321 to fix the first end 3323 of the reinforcing member 332 on the rotating portion 312.

When the second position-limiting structure 3321 is located at a second position, the locking member 331 may be in the unlocked state, and the locking member 331 can rotate relative to the propeller 32 about the rotation axis 32a of the propeller 32.

When the first position-limiting structure 3121 is the position-limiting groove 3121, and the second position-limiting structure 3321 is the position-limiting block 3321 capable of engaging with the position-limiting groove 3121, the guide-rail groove 3122 may connect with the position-limiting groove 3121, and the position-limiting block 3321 can move from the position-limiting groove 3121 into the position-limiting groove 3121, such that the locking member 331 can rotate relative to the propeller 32 about the rotation axis 32a.

The second end 3324 of the reinforcing member 332 is formed with an engaging hook 3322. The engaging hook 3322 includes an engaging portion 33221 and a contact portion 33222 that are connected to each other at an angle to each other. The engaging portion 33221 is engaged in the engaging hole 33137, and the contact portion 33222 is in contact with the bottom of the recess 33136.

The reinforcing member 332 also includes a connection arm 3323 connecting the second position-limiting structure 3321 and the engaging hook 3322. The connection arm 3323 may be made of an elastic material, which may be a metal sheet such as a copper sheet, an iron sheet, or a 301 stainless-steel sheet. The connection 3323 may be elastically deformed, such that the position-limiting block 3321 can be engaged in the position-limiting groove 3121, or can be detached from the position-limiting groove 3121 to dispose in the guide-rail groove 3122.

The reinforcing member 332 may be integrally formed from a metal sheet, such that the reinforcing member 332 can have a better elasticity. The reinforcing member 332 may be made of a metal, such as copper, iron, or 301 stainless steel. The reinforcing member 332 may be formed, for example, by a stamping process. There may be two reinforcing members 332, and each reinforcing member 332 may be connected to a locking catch 3313.

The connection member 333 is connected with the propeller 32 and the rotating portion 312. The connection member 333 is detachably mounted on the locking member 331. The connection member 333 includes a connection plate 3331 and a position-limiting shaft 3332 extending from the connection plate 3331 toward the propeller 32. The connection plate 3331 holds against the locking member 331. The position-limiting shaft 3332 is connected to the propeller 32 and can restrict the rotation of the propeller 32 relative to the connection member 333.

The position-limiting shaft 3332 matches the shape of the connection hole 3211. In one embodiment, the position-limiting shaft 3332 may have an oblong shape. In other embodiments, the connection hole 3211 may also be in the shape of a square, an ellipse, etc. The position-limiting shaft 3332 extends into the connection hole 3211 to restrict the rotation of the propeller 32 with respect to the connection member 333.

The connection member 333 also includes a reinforcing block 3333 and a position-limiting post 3334. The reinforcing block 3333 extends from the connection plate 3331 toward the hub 321, and corresponds to the mounting hole 3212 arranged on the side of the hub 321 facing the rotating portion 312. The reinforcing block 3333 is mounted in the mounting hole 3212.

The position-limiting post 3334 extends from the connection plate 3331 to the rotating portion 312. The position-limiting post 3334 is connected to the rotating portion 312 by passing through the locking member 331, which may restrict the rotation of the connection member 333 relative to the rotating portion 312, such that the rotating portion 312 can drive and rotate the propeller 32 through the connection member 333.

The position-limiting post 3334 is engaged in the position-limiting hole 3124, thus allowing the connecting relationship between the connection member 333 and the rotating portion 312 to be simple. In one embodiment, the position-limiting post 3334 may have a circular shape. In other embodiments, the position-limiting post 3334 may also be in another shape, such as a polygonal shape, an oblong shape, or an elliptical shape. There may be at least two position-limiting posts 3334. The position-limiting hole 3124 may correspond to the position-limiting post 3334. At least two position-limiting posts 3334 may be disposed in the corresponding position-limiting holes 3124.

The position-limiting post(s) 3334 corresponding to the position-limiting hole(s) 3124 means that the number and shape of the position-limiting post(s) 3334 are identical or approximately identical, and in terms of position, the position-limiting post(s) 3334 can be inserted into the position-limiting hole(s) 3124.

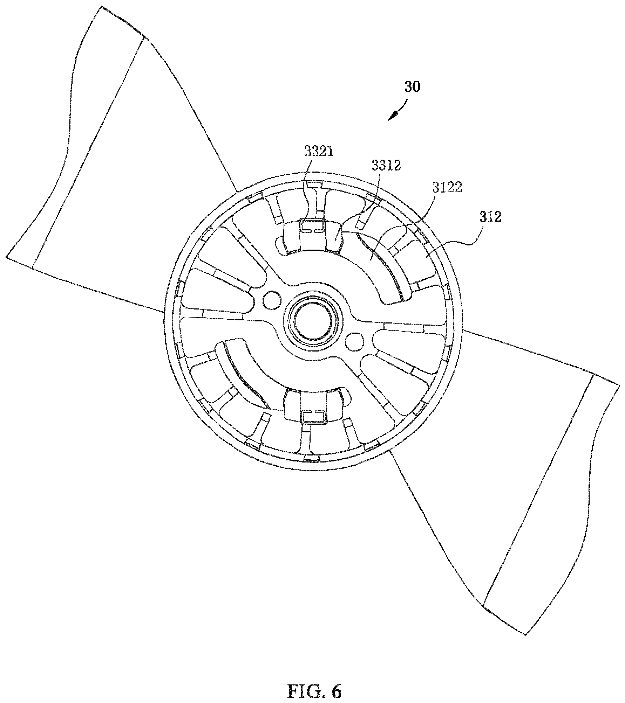

Referring to FIG. 2, FIG. 3, FIG. 4, and FIG. 6, during the assembly of the rotor-wing assembly 30, the engaging hook 3322 may be first engaged into the engaging hole 33137 for mounting the reinforcing member 332 on the locking member 331. Subsequently, the locking member 331 with the reinforcing member 332 may be mounted on the rotating portion 312 through the coupling between the guiding portion 3312 and the guide-rail groove 3122. Afterwards, the position-limiting post 3334 of the connection member 333 may be inserted into the position-limiting hole 3124 of the rotating portion 312, thus allowing the connection member 333 to be mounted on the locking member 331. Lastly, the locking catch 3313 may pass through the space 3232 formed between the first locking block 323 of the propeller 32 and one of the blades 322, and the connection hole 3211 and the mounting hole 3212 of the propeller 32 may be aligned and engaged with the position-limiting shaft 3332 and the reinforcing block 3333 of the connection member 333, respectively, such that the propeller 32 can be mounted on the connection member 333. At this point, the propeller 32 may be in the unlocked state and can be rotated together with the rotating portion 312. The position-limiting block 3321 may be located in the guide-rail groove 3122. The locking member 331 and the reinforcing member 332 can be rotated together with the propeller 32. The first alignment mark 3213 of the propeller 32 may be not aligned with the second alignment mark 33138 of the locking member 331.

When the propeller 32 needs to switch from the unlocked state to the locked state, the locking member 331 and the reinforcing member 332 may rotate together with respect to the rotation axis 32a of the propeller 32. The first mating surface 3231 may attach to the second mating surface 33132. With the rotation of the locking member 331 and the reinforcing member 332, the position-limiting block 3321 may eject from the guide-rail groove 3122 into the guide-rail grove 3122 and the locking member 331 cannot rotate relative to the propeller 32. At this point, the first alignment mark 3213 may align with the second alignment mark 33138, and the locking of the propeller 32 is completed.

When the propeller 32 needs to switch from the locked state to the unlocked state, the reinforcing member 332 may be pressed inwardly by hand, thus moving the position-limiting block 3321 into the guide-rail groove 3122 and away from the position-limiting groove 3121. Then the locking member 331 may be rotated and the propeller 32 can be switched from the locked state to the unlocked state.

In the rotor-wing assembly 30 and the UAV 100 implemented by the present invention, the reinforcing member 332 may reinforce the locking member 331 to lock the propeller 32 on the rotating portion 312, which can prevent the locking member 331 from being separated from the propeller 32 and causing the propeller 32 to fly off the motor 31 of the UAV 100, thus ensuring the normal flight of the UAV 100.

Moreover, the first liming structure 3121 may be a position-limiting block. The second position-limiting structure 3321 may be a position-limiting groove capable of engaging with the position-limiting block 3321, thus allowing the connecting structure between the reinforcing member 332 and the rotating portion 312 to be simpler and the cost of the rotor-wing assembly 30 to be reduced.

In addition, the guide-rail groove 3122 may be connected with the position-limiting groove 3121, such that the position-limiting block 3321 can be engaged with or disengaged from the position-limiting groove 3121.

Further, the engaging hook 3322 may be coupled with the engaging hole 3313, thus allowing the connection between the reinforcing member 332 and the locking member 331 to be simple, and inhibiting the rotation of the locking member 331 relative to the propeller 32. The contact portion 33222 may be in contact with the bottom of the recess 33136, which allows the reinforcing member 332 and the locking member 331 to be connected more tightly. The connection arm 3323 may be made of an elastic material, such that the reinforcing member 332 can be elastic in nature.

In some embodiments, the first position-limiting structure 3121 may be a position-limiting groove. Correspondingly, the second position-limiting structure 3321 may be a position-limiting block capable of engaging with the position-limiting groove.

In some embodiments, the engaging hook 3322 may include an engaging surface engaged with the top surface 33133. The reinforcing member 332 can be directly engaged with the top surface 33133 via the engaging surface to prevent the engaging hook 3322 from falling off the locking member 331.

In some embodiments, the engaging hook 3322 may include two engaging surfaces connected with each other at an angle to each other. The two engaging surfaces may be engaged with the top surface 33133 and the first side surface 33134, respectively.

In some embodiments, the top surface 33133 may be provided with an engaging hole. The engaging hook 3322 may include an engaging portion and a contact portion connected with each other at an angle to each other. The engaging portion may be engaged in the engaging hole. The contact portion may be in contact with the top surface 33133.

In some embodiments, the second side surface 33135 may be provided with an engaging hole. The engaging hook 3322 may be engaged into the engaging hole.

In the description of the present specification, reference to the terms "one embodiment," "some embodiments," "an exemplary embodiment," "an example," "a specific example," or "some examples" means that a description of the detailed embodiment or exemplary-embodiments-described feature, structure, material, or characteristic is included in at least one embodiment or example of the present invention In the present specification, a schematic representation of the foregoing terms does not necessarily refer to the same embodiment or example. Furthermore, the particular features, structures, materials, or characteristics described may be combined in any suitable manner in one or more embodiments or examples.

Moreover, the terms "first" and "second" are used for descriptive purpose only and are not to be construed as indicating or implying a relative importance or implicitly specifying the number of the indicated technical features. Thus, features defined with "first" and "second" may explicitly or implicitly include at least one feature. In the description of the present invention, "a plurality of' means at least two (e.g., two, three), unless specifically stated otherwise.

Although the principles and the specific embodiments of the present invention have been described above, with the instructions of the present invention, those skilled in the art can make various modifications and changes on the basis of the described embodiments, all of which fall within the scope of protection of the present invention. It should be understood by those skilled in the art that the foregoing description of the present invention is only to provide explanation of the present invention, not to limit the present invention. The scope of protection of the present invention is defined by the claims and their equivalents.

## Claims

1. A rotor-wing assembly, comprising a motor, a propeller, and a connection assembly connecting the propeller to the motor, the motor including a rotating portion, **characterized in that**:
the connection assembly comprises a locking member and a reinforcing member disposed between the propeller and the motor, the locking member locks the propeller on the rotating portion; a first end of the reinforcing member is mounted on the rotating portion, a second end of the reinforcing member opposite to the first end engages with the locking member for reinforcing the locking member to lock the propeller on the rotating portion.

2. The rotor-wing assembly according to claim 1, **characterized in that**, the rotating portion is formed with a first position-limiting structure, the first end of the reinforcing member is formed with a second position-limiting structure, when the second position-limiting structure is in a first position, the propeller is in a locked state, the first position-limiting structure is coupled with the second position-limiting structure to fix the first end of the reinforcing member on the rotating portion;
when the second position-limiting structure is in a second position, the propeller is in an unlocked state, and the locking member can rotate relative to the propeller about a rotation axis of the propeller.

3. The rotor-wing assembly according to claim 2, **characterized in that**, the first position-limiting structure is a position-limiting block, the second position-limiting structure is a position-limiting groove capable of engaging with the position-limiting block; and/or
the first position-limiting structure is a position-limiting groove, the second position-limiting structure is a position-limiting block capable of engaging with the position-limiting groove.

4. The rotor-wing assembly according to claim 3, **characterized in that**, the position-limiting groove extends in a circumferential direction of a propeller disk formed by rotation of the propeller.

5. The rotor-wing assembly according to claim 2, **characterized in that**, the rotating portion is formed with a guide-rail groove extending in a circumferential direction of a propeller disk formed by rotation of the propeller, the locking member comprises a mounting portion mounted on the rotating portion and a guiding portion extending from the mounting portion in a direction away from the propeller, the guiding portion is coupled with the guide-rail groove for guiding the locking member to rotate about the rotation axis.

6. The rotor-wing assembly according to claim 5, **characterized in that**, the guiding portion comprises a guiding section connected with the mounting portion and a holding section connected with the guiding section, the guiding section is in the guide-rail groove, the holding section engages on the rotating portion to prevent the locking member from being separated from the rotating portion.

7. The rotor-wing assembly according to claim 5, wherein when the first position-limiting structure is a position-limiting groove and the second position-limiting structure is a position-limiting block capable of engaging with the position-limiting groove, the guide-rail groove is connected with the position-limiting groove, the position-limiting block can move from the position-limiting groove into the position-limiting groove, such that the locking member can rotate relative to the propeller about the rotation axis.

8. The rotor-wing assembly according to claim 5, **characterized in that**, the locking member further comprises a locking catch extending from the mounting portion to the propeller;
the propeller includes a hub, a blade arranged on a peripheral wall of the hub, and a first locking block arranged on the peripheral wall and coupled with the locking catch, when the propeller is locked, the locking catch is connected with the first locking block, the second end of the reinforcing member engages with the locking catch.

9. The rotor-wing assembly according to claim 8, **characterized in that**, one end of the locking catch connecting with the first locking block is formed with a second locking block coupled to the first locking block, the locking member is engaged with the first locking block to lock the propeller through the second locking block.

10. The rotor-wing assembly according to claim 9, **characterized in that**, two mutually coupled surfaces of the first locking block and the second locking block are both inclined surfaces tilted at a predetermined angle relative to the rotation axis of the propeller, in a direction of the rotation axis, sides of the surfaces near the rotation axis are closer to the motor than sides away from the rotation axis.

11. The rotor-wing assembly according to claim 10, **characterized in that**, the two mutually coupled surfaces of the first locking block and the second locking block are engaged with each other in an interference fit manner.

12. The rotor-wing assembly according to any of claims 8-11, **characterized in that**, the second locking block comprises a top surface, a first side surface connected to the top surface adjacent to and facing the peripheral wall, and a second side surface opposite to the first side surface, the second end of the reinforcing member is formed with an engaging hook,
the engaging hook comprises an engaging surface, the engaging surface engaging on the top surface; or
the engaging hook comprises two engaging surfaces connected with each other at an angle to each other, the two engaging surfaces engaging on the top surface and the first side surface, respectively; or
the top surface is provided with an engaging hole, the engaging hook comprises an engaging portion and a contact portion connected with each other at an angle to each other, the engaging portion is engaged in the engaging hole, the contact portion is in contact with the top surface; or
the top surface is provided with a recess, a bottom of the recess is provided with the engaging hole, the engaging hook comprises the engaging portion and the contact portion connected with each other at an angle to each other, the engaging portion is engaged in the engaging hole, the contact portion is in contact with the bottom of the recess; or
the second side surface is provided with the engaging hole, and the engaging hook is engaged in the engaging hole.

13. The rotor-wing assembly according to claim 12, **characterized in that**, the reinforcing member further comprises a connection arm connecting the second position-limiting structure and the engaging hook, the connection arm is made of an elastic material.

14. The rotor-wing assembly according to claim 8, wherein there are two blades, the first locking block is located between the two blades, a space is formed between the first locking block and one of the two blades for allowing the locking catch to pass through.

15. The rotor-wing assembly according to claim 8, **characterized in that**, the connection assembly further comprises a connection member connecting the propeller and the rotating portion, the connection member can be detachably mounted on the locking member.

16. The rotor-wing assembly according to claim 15, **characterized in that**, the connection member comprises a connection plate and a position-limiting shaft extending from the connecting plate to the propeller, the connection plate holds against the locking member, the position-limiting shaft is connected with the propeller and can restrict the rotation of the propeller relative to the connection member.

17. The rotor-wing assembly according to claim 16, **characterized in that**, the connection member further comprises a reinforcing block extending from the connection plate to the hub, a side of the hub facing the rotating portion is provided with a mounting hole corresponding to the reinforcing block, and the reinforcing block is mounted in the mounting hole.

18. The rotor-wing assembly according to claim 16, **characterized in that**, the connection member further comprises a position-limiting post extending from the connection plate to the rotating portion, the position-limiting post passes through the locking member and is connected to the rotating portion, and can restrict the rotation of the connection member relative to the rotating portion.

19. The rotor-wing assembly according to claim 18, **characterized in that**, the rotating portion comprises an end surface facing the connection member, the end surface is provided with a position-limiting hole, the position-limiting post is engaged in the position-limiting hole.

20. The rotor-wing assembly according to claim 19, **characterized in that**, the position-limiting post is of a polygonal shape, an oblong shape, or an elliptical shape.

21. The rotor-wing assembly according to claim 19, **characterized in that**, there are at least two position-limiting posts, the position-limiting posts correspond to the position-limiting holes, the at least two position-limiting posts are located in the corresponding position-limiting holes.

22. The rotor-wing assembly according to claim 21, **characterized in that**, the at least two position-limiting holes are arranged centrosymmetrically about the rotation axis.

23. An unmanned aerial vehicle, **characterized in** comprising the rotor-wing assembly according to any of claims 1-22.
